# EUROPÄISCHE PATENTSCHRIFT

(11) **EP 3 953 862 B1**
(45) Veröffentlichungstag und Bekanntmachung des Hinweises auf die Patenterteilung: **18.02.2026**
(21) Anmeldenummer: 20726731.1
(22) Anmeldetag: 08.05.2020
(51) Int. Cl.: G06V 10/772, G06V 10/774, G06V 10/82, G06V 20/64, G06T 7/20, G06T 7/70, G06N 3/082

(54) **VERFAHREN ZUM BEREITSTELLEN EINER OBJEKTVERFOLGUNGSFUNKTION**
METHOD FOR PROVIDING AN OBJECT TRACKING FUNCTION
PROCÉDÉ POUR FOURNIR UNE FONCTION DE POURSUITE D'OBJET

(30) Priorität: 16.05.2019 DE 102019207090
(43) Veröffentlichungstag der Anmeldung: 16.02.2022
(73) Patentinhaber: Volkswagen Aktiengesellschaft, 38440 Wolfsburg (DE)
(72) Erfinder: THIEL, Kevin, 14469 Potsdam (DE)
(86) Internationale Anmeldenummer: PCT/EP2020/062895
(87) Internationale Veröffentlichungsnummer: WO 2020/229352

(56) Entgegenhaltungen:
- LAAN CHRIS: "Real-time 3D car pose estimation trained on synthetic data", 28 March 2019 (2019-03-28), XP093078797, Retrieved from the Internet <URL:https://web.archive.org/web/20200216214053/https://labs.laan.com/blog/real-time-3d-car-pose-estimation-trained-on-synthetic-data.html> [retrieved on 20230905]
- LAANLABS: "Real time 3d car pose estimation on phone", 28 March 2019 (2019-03-28), XP093078801, Retrieved from the Internet <URL:https://www.youtube.com/watch?v=l-Q5hgl-d64> [retrieved on 20230905]
- SU HAO ET AL: "Render for CNN: Viewpoint Estimation in Images Using CNNs Trained with Rendered 3D Model Views", 2015 IEEE INTERNATIONAL CONFERENCE ON COMPUTER VISION (ICCV), IEEE, 7 December 2015 (2015-12-07), pages 2686 - 2694, XP032866613, [retrieved on 20160217], DOI: 10.1109/ICCV.2015.308
- ROZANTSEV ARTEM ET AL: "On rendering synthetic images for training an object detector", COMPUTER VISION AND IMAGE UNDERSTANDING, ACADEMIC PRESS, US, vol. 137, 20 January 2015 (2015-01-20), pages 24 - 37, XP029209279, ISSN: 1077-3142, DOI: 10.1016/J.CVIU.2014.12.006
- RAMBACH JASON ET AL: "Learning 6DoF Object Poses from Synthetic Single Channel Images", 2018 IEEE INTERNATIONAL SYMPOSIUM ON MIXED AND AUGMENTED REALITY ADJUNCT (ISMAR-ADJUNCT), IEEE, 16 October 2018 (2018-10-16), pages 164 - 169, XP033542839, DOI: 10.1109/ISMAR-ADJUNCT.2018.00058
- ALEX KENDALL ET AL: "Modelling uncertainty in deep learning for camera relocalization", ARXIV.ORG, 18 February 2016 (2016-02-18), arXiv:1509.06825 [cs.LG], pages 4762 - 4769, XP055561335, ISBN: 978-1-4673-8026-3, DOI: 10.1109/ICRA.2016.7487679
- YI LI ET AL: "DeepIM: Deep Iterative Matching for 6D Pose Estimation", ARXIV.ORG, CORNELL UNIVERSITY LIBRARY, 201 OLIN LIBRARY CORNELL UNIVERSITY ITHACA, NY 14853, 31 March 2018 (2018-03-31), XP081127886
- KOREITEM KARIM ET AL: "Synthetically Trained 3D Visual Tracker of Underwater Vehicles", OCEANS 2018 MTS/IEEE CHARLESTON, IEEE, 22 October 2018 (2018-10-22), pages 1 - 7, XP033494509, DOI: 10.1109/OCEANS.2018.8604597

## Beschreibung

Die Erfindung betrifft ein Verfahren zum Bereitstellen einer Objektverfolgungsfunktion. Ferner betrifft die Erfindung eine Vorrichtung zur Datenverarbeitung, ein Computerprogramm und ein computerlesbares Speichermedium.

Im Bereich der Augmented Reality wird eine Kamerapose relativ zu einem Objekt auf Grundlage von erfassten Kamerabildern mit Hilfe von Objektverfolgungsfunktionen ("Object Tracking") bestimmt und bereitgestellt. Ausgehend von der bestimmten Kamerapose kann eine Zusatzinformation in den Kamerabildern mit dem abgebildeten Objekt überlagert werden. Das Bereitstellen von Objektverfolgungsfunktionen ist hierbei jedoch nur unbefriedigend gelöst.

Aus Jason Rambach et al., Learning 6DoF Object Poses from Synthetic Single Channel Images, 2018 IEEE INTERNATIONAL SYMPOSIUM ON MIXED AND AUGMENTED REALITY ADJUNCT (ISMAR-ADJUNCT), IEEE, 16.10.2018, doi:10.1109/ISMAR-ADJUNCT.2018.00058, Seiten 164 - 169, ist ein Verfahren zum Schätzen einer Objektpose bekannt, bei dem das Verfahren mittels synthetisch erzeugter Bilder trainiert wird.

Aus Alex Kendall und Roberto Cipolla, Modelling uncertainty in deep learning for camera relocalization, arXiv:1509.06825 [cs.LG], 18.02.2016, doi:10.1109/ICRA.2016.7487679, ISBN 978-1-4673-8026-3, Seiten 4762 - 4769, ist ein Verfahren zum Schätzen einer Unsicherheit bei tiefem Lernen für eine Kameralokalisierung bekannt.

Aus Yi Li et al., DeeplM: Deep Iterative Matching for 6D Pose Estimation, Computer Vision and Pattern Recognition (cs.CV); Robotics (cs.RO), arXiv:1804.00175v3 [cs.CV], 14.05.2019, https://doi.org/10.1007/s11263-019-01250-9, ist ein Verfahren zum iterativen Anpassen einer sechsdimensionalen Posenschätzung bekannt, bei dem ein gerendertes Bild mit einem erfassten Bild verglichen wird.

Aus Karim Koreitem et al., Synthetically Trained 3D Visual Tracker of Underwater Vehicles, OCEANS 2018 MTS/IEEE CHARLESTON, IEEE, 22.10.2018, doi:10.1109/OCEANS.2018.8604597, Seiten 1 - 7, ist ein Verfahren zum visuellen Tracken eines Unterwasserfahrzeugs bekannt, das mit synthetisch erzeugten Bildern trainiert wurde.

Aus Chris Laan, Real-time 3D car pose estimation trained on synthetic data, 28. März 2019, https://web.archive.org/web/20200216214053/https://labs.laan.com/blog/real-time-3d-car-pose-estimation-trained-on-synthetic-data.html, ist ein Verfahren zum Trainieren mittels synthetisch erzeugten Trainingsdaten bekannt. Aus Laanlabs, Real time 3d car pose estimation on phone, 28. März 2019, https://www.youtube.com/watch?v=I-Q5hgl-d64, ist ein zugehöriges Demonstrationsvideo bekannt.

Aus Su Hao et al., Reader for CNN: Viewpoint Estimation in Images Using CNNs Trained with Rendered 3D Model Views, 2015 IEEE International Conference on Computer Vision (ICCV), IEEE, 7. Dezember 2015, Seiten 2686-2694, DOI: 10.1109/ICCV.2015.308, ist ein Verfahren zum Schätzen eines Betrachtungspunktes mittels eines Faltungsnetzes bekannt, das mit gerenderten 3D-Modellansichten trainiert wurde.

Aus Artem Rozantsev, On rendering synthetic images for training an object detector, Computer Vision and Image Understanding, Academic Press, USA, Bd. 137, 20. Januar 2015, Seiten 24-37, ISSN: 1077-3142, DOI: 10.1016/J.CVIU.2014.12.006, ist ein Verfahren zum Trainieren eines Objektdetektors mittels synthetischen Bildern bekannt.

Der Erfindung liegt die Aufgabe zu Grunde, ein Verfahren zum Bereitstellen einer Objektverfolgungsfunktion zu verbessern.

Die Aufgabe wird erfindungsgemäß durch ein Verfahren mit den Merkmalen des Patentanspruchs 1 gelöst. Ferner wird die Aufgabe erfindungsgemäß durch eine Vorrichtung mit den Merkmalen des Patentanspruchs 7, ein Computerprogramm mit den Merkmalen des Patentanspruchs 8 und ein computerlesbares Speichermedium mit den Merkmalen des Patentanspruchs 9 gelöst. Vorteilhafte Ausgestaltungen der Erfindung ergeben sich aus den Unteransprüchen.

Insbesondere wird ein Verfahren zum Bereitstellen einer Objektverfolgungsfunktion zur Verfügung gestellt, wobei die Objektverfolgungsfunktion auf Grundlage von erfassten Sensordaten eines Sensors eine Sensorpose relativ zu einem zu verfolgenden Objekt bereitstellt, wobei die Objektverfolgungsfunktion mittels eines objektspezifisch trainierten tiefen Neuronalen Netzes bereitgestellt wird, und wobei das objektspezifisch trainierte tiefe Neuronale Netz mit Hilfe von simulierten Sensordaten trainiert wird.

Ferner wird insbesondere eine Vorrichtung zur Datenverarbeitung geschaffen, umfassend Mittel zur Ausführung der Verfahrensschritte des Verfahrens.

Weiter wird insbesondere ein Computerprogramm geschaffen, umfassend Befehle, die bei der Ausführung des Computerprogramms durch einen Computer diesen veranlassen, die Verfahrensschritte des Verfahrens auszuführen.

Darüber hinaus wird insbesondere ein computerlesbares Speichermedium geschaffen, umfassend Befehle, die bei der Ausführung durch einen Computer diesen veranlassen, die Verfahrensschritte des Verfahrens auszuführen.

Das Verfahren und die Vorrichtung ermöglichen es, das zum Bereitstellen der Objektverfolgungsfunktion verwendete tiefe Neuronale Netz ohne einen auf erfassten Sensordaten basierenden Trainingsdatensatz zu trainieren. Hierzu werden simulierte Sensordaten, welche auch als synthetische Sensordaten bezeichnet werden können, verwendet. Die simulierten Sensordaten werden insbesondere auf Grundlage eines dreidimensionalen Objektmodells, beispielsweise auf Grundlage von CAD-Daten, simuliert. Ausgehend von dem Objektmodell werden die simulierten Sensordaten erzeugt, wobei diese möglichst realitätsgetreu erzeugt werden. Der Trainingsdatensatz umfasst hierzu eine Vielzahl von simulierten Sensordaten, wobei die Sensordaten jeweils für eine Vielzahl von unterschiedlichen Sensorposen erzeugt werden. Nach dem Abschluss der Trainingsphase kann das trainierte Neuronale Netz in einer Inferenzphase eine Sensorpose relativ zum zu verfolgenden Objekt auf Grundlage von erfassten Sensordaten schätzen und diese, insbesondere in Form von Sensorposendaten, bereitstellen. Die Sensorpose umfasst hierbei sowohl eine Position (z.B. in kartesischen Koordinaten x, y und z) als auch eine Orientierung (z.B. als Gier-, Nick- und Rollwinkel) des Sensors relativ zu dem zu verfolgenden Objekt, sodass insgesamt sechs Freiheitsgrade vorhanden sind. Prinzipiell wäre auch eine Nutzung eines Quaternion möglich, in diesem Fall gäbe es 7 Freiheitsgrade.

Der Vorteil der Erfindung ist, dass auf ein umfangreiches Erfassen und Zusammenstellen von Sensordaten zum Trainieren des tiefen Neuronalen Netzes verzichtet werden kann. Hierdurch lassen sich Aufwand, Zeit und Kosten einsparen.

Ein weiterer Vorteil der Erfindung ist, dass nach dem Trainieren des tiefen Neuronalen Netzes eine Objektverfolgungsfunktion zur Verfügung gestellt werden kann, ohne dass detaillierte Daten des Objekts, wie beispielsweise Konstruktionsdetails, bekannt sein oder bereitgestellt werden müssen. Das trainierte tiefe Neuronale Netz ist ohne weitere Eingabeparameter einsatzbereit und ermöglicht daher auch eine Verwendung in sicherheitsrelevanten Anwendungsfällen, in denen ein Objektmodell, beispielsweise in Form von detaillierten CAD-Daten, aus Gründen der Geheimhaltung nicht bereitgestellt werden kann oder soll.

Prinzipiell ist es möglich, neben den simulierten Sensordaten zusätzlich auch erfasste Sensordaten zu verwenden. Diese werden den simulierten Sensordaten dann hinzugefügt.

Auf Grundlage der bereitgestellten Sensorpose kann anschließend ein mit den Sensordaten überlagerter Augmented Reality-Inhalt bereitgestellt werden. Ferner ließen sich auch Steuerdaten zum Steuern einer Aktorik ableiten.

Ein tiefes Neuronales Netz ist insbesondere ein Künstliches Neuronales Netz, insbesondere ein Faltungsnetz (engl. convolutional neural network).

Das tiefe Neuronale Netz wird objektspezifisch trainiert und bereitgestellt, das heißt zu einem zu verfolgenden Objekt bzw. einer zu verfolgenden Objektklasse wird ein spezifisch hierfür trainiertes tiefes Neuronales Netz bereitgestellt und verwendet. Dies hat den Vorteil, dass das tiefe Neuronale Netz maßgeschneidert auf ein einziges Objekt bereitgestellt wird und hierdurch eine hohe Güte bei der Objektverfolgungsfunktion bereitgestellt werden kann.

Der Sensor ist insbesondere eine Kamera, insbesondere eine im sichtbaren Wellenlängenbereich arbeitende Kamera. Die Sensordaten sind insbesondere Kamerabilder, insbesondere RGB-Kamerabilder des zu verfolgenden Objektes. Die Kamera kann auch eine Tiefenkamera (RGB-D) sein, welche zusätzlich noch eine Tiefeninformation bereitstellt.

Sensordaten können prinzipiell eindimensional oder mehrdimensional ausgebildet sein. Insbesondere sind Sensordaten zweidimensionale Kamerabilder, welche von einer Kamera erfasst und bereitgestellt werden.

Das Verfahren wird insbesondere als computerimplementierte Erfindung ausgeführt.

Insbesondere wird das Verfahren mittels einer Recheneinrichtung, die auf einen Speicher zugreifen kann, ausgeführt. Die Recheneinrichtung kann als eine Kombination von Hardware und Software ausgebildet sein, beispielsweise als Programmcode, der auf einem Mikrocontroller oder Mikroprozessor ausgeführt wird.

Die bereitgestellte Objektverfolgungsfunktion mit dem trainierten tiefen Neuronalen Netz kann insbesondere auf einem relativ kleinen Computer ausgeführt werden. Insbesondere kann eine Anwendung ohne Kenntnis von CAD-Daten des zu verfolgenden Objekts erfolgen, sodass diesbezügliche Daten nicht bereitgestellt werden müssen und daher geheim gehalten werden können.

In einer Ausführungsform ist vorgesehen, dass Sensorposen relativ zu dem zu verfolgenden Objekt, für die die simulierten Sensordaten erzeugt werden, zufällig gewählt werden. Hierdurch kann eine Anzahl von Sensorposen reduziert werden, wobei trotzdem im Mittel sämtliche Sensorposen durch die Trainingsdaten abgedeckt werden können. Dies spart Rechenleistung und daher Kosten und Aufwand. Zum zufälligen Festlegen der Sensorposen kann vorgesehen sein, dass die Sensorposen derart gewählt werden, dass eine durch Mittelung aller Sensorposen gebildete mittlere Sensorpose gleich Null ist, sodass trotz der zufälligen Auswahl eine gleichmäßige Verteilung sichergestellt ist.

In einer Ausführungsform ist vorgesehen, dass zum Erzeugen der simulierten Sensordaten mindestens eine Eigenschaft des zu verfolgenden Objekts verändert wird. Eine solche Eigenschaft kann beispielsweise eine Oberflächeneigenschaft sein, wie eine Farbe oder ein Reflexionsverhalten einer Oberfläche des Objekts. Hierdurch können ausgehend von dem Objektmodell Varianten des Objektes geschaffen werden, welche eine Varianz des Objekts innerhalb der Trainingsdaten für das tiefe Neuronale Netz erhöhen. Ferner können auch Variationen in der Geometrie berücksichtigt werden, beispielsweise beim Herstellen des Objektes auftretende Toleranzen, Fehler und/oder Mängel.

In einer weiteren Ausführungsform ist vorgesehen, dass beim Erzeugen der simulierten Sensordaten mindestens eine Eigenschaft des Sensors berücksichtigt wird. Dies können insbesondere Eigenschaften in Form von hervorgerufenen Sensorartefakten sein. Handelt es sich bei dem Sensor um eine Kamera, so können diese Eigenschaften beispielsweise ein Rauschen, eine Unschärfe, ein Weißabgleich und/oder eine Empfindlichkeit der Kamera sein. Zum Erzeugen der simulierten Sensordaten werden diese Parameter in simulierten Kamerabildern beispielsweise schrittweise abgestuft verändert.

In einer Ausführungsform ist vorgesehen, dass beim Erzeugen der simulierten Sensordaten mindestens eine Umfeldeigenschaft berücksichtigt wird. Eine solche Umfeldeigenschaft kann beispielsweise eine Hintergrundszenerie sein, vor dem das zu verfolgende Objekt sich befindet. Um das tiefe Neuronale Netz unabhängig von der konkreten Hintergrundszenerie zu machen, wird beispielsweise in den simulierten Sensordaten eine Vielzahl unterschiedlicher Hintergrundszenerien simuliert. Im Fall von simulierten Kamerabildern kann beispielsweise ein Hintergrundbild zufällig gewählt werden, ohne dass das in einer Objektpose abgebildete zu verfolgende Objekt hierbei selbst verändert wird. Es kann jedoch vorgesehen sein, zusätzlich auch das abgebildete Objekt bzw. eine simulierte Kameraabbildung des zu verfolgenden Objekts im Bereich des Objekts in Abhängigkeit einer gewählten Hintergrundszenerien zu verändern, beispielsweise indem eine Oberflächenreflexion eines Teils der Hintergrundszenerie auf das Objekt abgebildet bzw. auf diesem simuliert wird. Weitere Umfeldeigenschaften können beispielsweise eine Verdeckung des Objekts oder eine Beleuchtungssituation (z.B. Lichtquellen, Schlagschatten, Blendeneffekte etc.) sein.

Insbesondere kann vorgesehen sein, dass eine Domain Randomization an den simulierten Sensordaten durchgeführt wird, um die Menge an simulierten Sensordaten zu vergrößern. Dies stellt einen weiteren Weg dar, die simulierten Sensordaten realitätsgetreuer zu machen.

In einer Ausführungsform ist vorgesehen, dass die simulierten Sensordaten zumindest teilweise mittels eines fotorealistischen Renderings erzeugt werden. Hierdurch kann eine besonders realistische Simulation der Sensordaten erfolgen, wobei auf bereits bekannte Techniken zurückgegriffen werden kann, wie diese beispielsweise in der Filmtechnik oder bei Computerspielen verwendet werden.

Es ist vorgesehen, dass beim Trainieren des tiefen Neuronalen Netzes eine Lossfunktion (bzw. Fehlerfunktion oder Zielwertfunktion) verwendet wird, bei der ein Betrachtungsabstand des Sensors zum zu verfolgenden Objekt berücksichtigt wird. Es wird für die Lossfunktion ein Fehler berücksichtigt, der auf Grundlage einer Differenz zwischen einer beim Simulieren verwendeten Sensorpose und einer mittels der tiefen Neuronalen Netzes geschätzten Sensorpose bestimmt wird, wobei die Differenz auf Grundlage des Betrachtungsabstandes zwischen Sensor und Objekt normalisiert werden kann oder normalisiert sein kann. Hierdurch kann der Fehler einheitslos gemacht werden, das heißt unabhängig von einer konkret vorliegenden Objektgröße. So kann beispielsweise der Fall auftreten, dass ein großer Fehler bei einer bestimmten Kameraposition in einer Überlagerung des erfassten Kamerabildes mit einem virtuellen Bildinhalt einer Augmented Reality nur zu einem vernachlässigbaren Fehler führt.

Es kann zum Ableiten des Fehlers auch vorgesehen sein, dass dreidimensionale Punkte des Objektes in der simulierten und der geschätzten Sensorpose jeweils auf eine zweidimensionale Fläche projiziert werden. Ein Fehler wird dann über Korrespondenzen miteinander paarweise korrespondierender Punkte auf der zweidimensionalen Fläche bestimmt. Dies ist von Vorteil bei einem Anwendungsszenario in der Augmented Reality, da eine Optimierung des tiefen Neuronalen Netzes speziell für eine zweidimensionale Überlagerung erfolgt.

Um einen Losswert der Lossfunktion (d.h. einen Fehlerwert) zu bestimmen, werden insbesondere mindestens drei Vergleichspunkte benötigt. Die Vergleichspunkte können zufällig gewählt sein oder aus den CAD-Daten des Objektes abgeleitet werden, z.B. über Vertices des Objektes. Um den Losswert zu bestimmen, können beispielsweise die folgenden Schritte durchgeführt werden.
1. Es werden zwei Sensorpositionen (z.B. Kamerapositionen) festgelegt, zum einen auf Grundlage der bei der Simulation verwendeten Sensorpose, zum anderen auf Grundlage der vom tiefen Neuronalen Netz geschätzten Sensorpose.
2. Es werden zwei mit den Sensoren (bzw. Kameras) korrespondierende Objekte mit jeweils relevanten Punkten in den Koordinatenursprung gesetzt.
3. Die Sensoren (bzw. Kameras) werden auf den Koordinatenursprung verschoben, wobei die Objekte jeweils um den entsprechenden Versatz verschoben werden.
4. Die Sensoren (bzw. Kameras) werden auf eine Orientierung mit den Winkeln (0, 0, 0) gedreht, das jeweils zugehörige Objekt wird hierbei um den Koordinatenursprung entsprechend mitrotiert. Die Sensoren (bzw. Kameras) liegen dann übereinander.
5. Es werden für jedes der beiden Objekte mindestens drei Punkte bestimmt, welche paarweise miteinander korrespondieren. Eine durchschnittliche Abweichung der mindestens drei Punkte zueinander bestimmt einen Fehler und definiert den Losswert der Lossfunktion (wird hingegen wie oben beschrieben eine Korrespondenz auf einer zweidimensionalen Fläche ausgewertet, so reichen hierzu bereits mindestens zwei Punkte aus).

In einer Ausführungsform ist vorgesehen, dass während einer Inferenzphase des tiefen Neuronalen Netzes Neuronen zufällig deaktiviert werden. Insbesondere erfolgt bei jedem weiteren Inferenzdurchlauf eine erneute zufällige Auswahl von deaktivierten Neuronen, sodass das tiefe Neuronale Netz beim Inferieren jedes Mal eine teilweise geänderte Struktur bzw. Verknüpfung aufweist. Im tiefen Neuronalen Netz ist hierzu beispielsweise eine Schicht reserviert, in der einzelne Neuronen während der Inferenzphase zufällig deaktiviert werden. Insbesondere kann hierbei das Gal-Dropout-Verfahren verwendet werden. Der mehrmalige Durchlauf mit teilweise geänderter Struktur ermöglicht eine statistische Behandlung der Ergebnisse. So kann beispielsweise eine Varianz als Maß einer Unsicherheit der geschätzten Sensorpose bestimmt werden.

Nach dem Durchführen einer Inferenzphase kann vorgesehen sein, dass die Inferenzphase wiederholt wird, um fortlaufend eine aktuelle Sensorpose auf Grundlage aktuell erfasster Sensordaten mittels des trainierten tiefen Neuronalen Netzes zu schätzen und bereitzustellen.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Vorrichtung zur Datenverarbeitung zum Bereitstellen einer Objektverfolgungsfunktion;
- Fig. 2: eine schematisches Datenflussdiagramm zur Verdeutlichung einer Ausführungsform des Verfahrens;
- Fig. 3: eine schematische Darstellung eines Anwendungsbeispiels des trainierten tiefen Neuronalen Netzes;
- Fig. 4: eine schematische Darstellung eines Aufbaus einer Ausführungsform des tiefen Neuronalen Netzes.

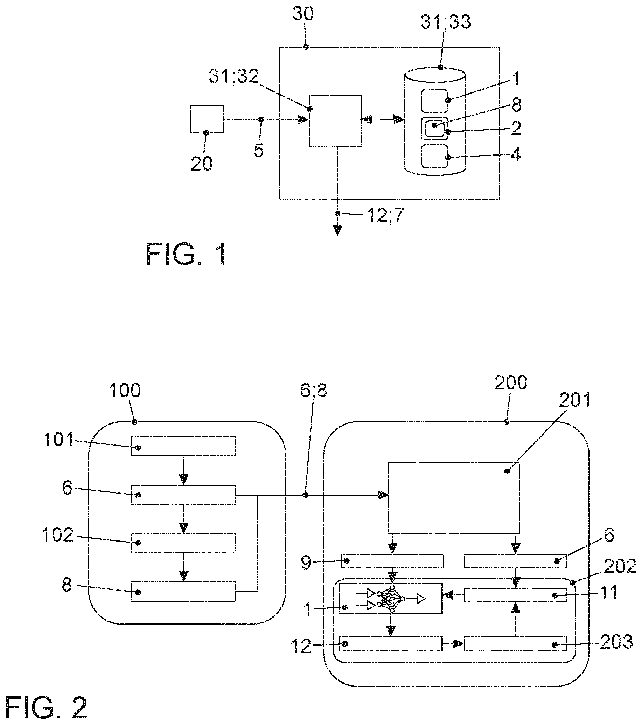

In Fig. 1 ist eine schematische Darstellung einer Ausführungsform der Vorrichtung 30 zum Ausführen des Verfahrens gezeigt. Die Vorrichtung 30 umfasst Mittel 31 zum Ausführen des Verfahrens. Die Mittel 31 sind eine Recheneinrichtung 32 und ein Speicher 33. Zum Durchführen der Verfahrensschritte kann die Recheneinrichtung 32 auf den Speicher 33 zugreifen und in diesem Rechenoperationen durchführen.

In dem Speicher 33 sind ein tiefes Neuronales Netz 1, insbesondere ein Faltungsnetz, und ein Trainingsdatensatz 2 hinterlegt. Die Recheneinrichtung 32 erzeugt den Trainingsdatensatz 2, wobei der Trainingsdatensatz 2 eine Vielzahl von simulierten Sensordaten 8, insbesondere simulierte Kamerabilder, umfasst. Die simulierten Sensordaten 8 werden von der Recheneinrichtung 32 auf Grundlage eines dreidimensionalen Objektmodells 4 eines zu verfolgenden Objektes, erzeugt. Das Objektmodell 4 umfasst beispielsweise CAD-Daten des zu verfolgenden Objekts.

Auf Grundlage des Trainingsdatensatzes 2 bzw. der simulierten Sensordaten 8 trainiert die Recheneinrichtung 32 das tiefe Neuronale Netz 1 während einer Trainingsphase.

Während einer anschließenden Inferenzphase werden der Recheneinrichtung 32 erfasste Sensordaten 5 eines Sensors 20, z.B. einer Kamera, zugeführt. Die erfassten Sensordaten 5 werden mittels der Recheneinrichtung 32 auf das tiefe Neuronale Netz 1 angewandt, das heißt einer Eingangsschicht des tiefen Neuronalen Netzes 1 zugeführt. An einer Ausgangsschicht des tiefen Neuronalen Netzes 1 wird als inferiertes Ergebnis des tiefen Neuronalen Netzes 1 eine geschätzte Sensorpose 12 bereitgestellt, welche von der Recheneinrichtung 32 beispielsweise als Sensorposensignal 7 ausgegeben wird.

Es kann vorgesehen sein, dass eine Struktur, Parameter und Gewichtungsdaten des trainierten tiefen Neuronale Netzes 1 von der Recheneinrichtung 32 als Datenpaket exportiert werden, sodass das trainierte tiefe Neuronale Netz 1 beispielsweise in einer anderen Vorrichtung eingesetzt werden kann, ohne vorher erneut trainiert werden zu müssen.

In Fig. 2 ist eine schematisches Datenflussdiagramm zur Verdeutlichung einer Ausführungsform des Verfahrens gezeigt. In einem Verfahrensabschnitt 100 werden simulierte Sensordaten erzeugt und bereitgestellt. Der Verfahrensabschnitt 100 umfasst die Verfahrensschritte 101 und 102.

Im Verfahrensschritt 101 werden Markierungen ("Labels") für einen Trainingsdatensatz erzeugt. Dies erfolgt, indem eine Auswahl von Sensorposen 6 zusammengestellt wird. Dies kann insbesondere zufällig erfolgen, wobei eine gleichmäßige Verteilung der Sensorposen 6 um das Objekt herum angestrebt wird. Eine Sensorpose 6 umfasst hierbei eine dreidimensionale Position und eine drei Winkelangaben umfassende Orientierung des Sensors relativ zu dem Objekt, sodass sich insgesamt sechs Freiheitsgrade für die Sensorpose ergeben. Das Objekt befindet sich hierbei in einem Koordinatenursprung. Der Sensor ist insbesondere eine Kamera, sodass die Sensorpose eine Kamerapose ist. Ergebnis des Verfahrensschritt 101 ist eine Liste von Sensorposen bzw. Markierungen ("Labeln").

Die Auswahl der zufälligen Kameraposen kann beispielsweise wie folgt erfolgen. Es wird ein Ikosaeder um das Objekt herum erzeugt durch Setzen von Ikosaederpunkten. Anschließend werden Punkte über die resultierenden Dreiecke des Ikosaeders gleichmäßig, das heißt in gleichen Abständen, verteilt. Aus dieser Punktmenge werden Punkte ausgewählt, die den gleichen Abstand zum (im Objekt liegenden) Koordinatenursprung aufweisen. Auf Grundlage dieser Menge wird eine neue Punktmenge erzeugt, wobei jeweils ein Abstand zum Objekt auf den einfachen bis dreifachen Objektradius bzw. die einfache bis dreifache maximale Objektausdehnung gesetzt wird. Für Punkte der resultierenden Punktmenge wird jeweils mindestens eine zufällige Sensororientierung bzw. Kameraorientierung gewählt. Anschließend steht eine Menge an Sensorposen bzw. Kameraposen für die Simulation bereit.

In einem nachfolgenden Verfahrensschritt 102 werden auf Grundlage der ausgewählten Sensorposen 6 simulierte Sensordaten 8 erzeugt bzw. simuliert. Handelt es sich bei dem Sensor um eine Kamera, so erfolgt dies insbesondere indem ein Kamerabild für jede Kamerapose simuliert bzw. berechnet wird. Hierzu wird das Kamerabild auf Grundlage der Kamerapose und eines Objektmodells des Objektes simuliert, beispielsweise durch Berechnen einer virtuellen dreidimensionalen Darstellung des Objektes und einer anschließenden Projektion auf die Kameraebene auf Grundlage der aus der Liste gewählten Kamerapose.

Es kann hierbei vorgesehen sein, dass die simulierten Kamerabilder (simulierte Sensordaten 8) zumindest teilweise mittels eines fotorealistischen Renderings erzeugt werden. Hierbei können zufällige Variationen des Objektes zur Berücksichtigung einer bei der Herstellung des realen Objekts üblicherweise auftretenden Varianz erfolgen.

Ergebnis des Verfahrensschritts 102 ist ein Stapel von simulierten Sensordaten 8 bzw. Kamerabildern, welche jeweils mit einer Sensorpose 6 korrespondieren.

Zum Durchführen einer Trainingsphase werden die miteinander korrespondierenden Markierungen bzw. Sensorposen 6 (Kameraposen) und die simulierten Sensordaten 8 (simulierte Kamerabilder) dem tiefen Neuronalen Netz zugeführt.

In einem Trainingsabschnitt 200 wird das tiefe Neuronale Netz trainiert. Hierzu werden die simulierten Sensordaten 8 bzw. die Kamerabilder zuerst in einem Verfahrensschritt 201 durch eine Vielzahl von Veränderungen augmentiert, das heißt jeweils verändert, um die Datenbasis beim Trainieren zu vergrößern.

Hierbei kann vorgesehen sein, dass mindestens eine Eigenschaft des zu verfolgenden Objekts in den simulierten Sensordaten 8 bzw. in den Kamerabildern verändert wird. In einem Kamerabild kann beispielsweise eine Farbe oder einer Reflexionseigenschaft einer Oberfläche des zu verfolgenden Objekts verändert werden.

Es kann ferner vorgesehen sein, dass mindestens eine Eigenschaft des Sensors berücksichtigt wird. Bei einer als Sensor verwendeten Kamera kann beispielsweise eine Empfindlichkeit oder ein Weißabgleich berücksichtigt werden. Ferner kann ein Sensorrauschen bzw. ein Bildrauschen berücksichtigt werden. Hierbei wird versucht, Eigenschaften des Sensors bzw. der Kamera möglichst realitätsgetreu, das heißt auch unter Berücksichtigung auftretender Varianzen der Eigenschaften, nachzubilden.

Weiter kann vorgesehen sein, dass hierbei mindestens eine Umfeldeigenschaft berücksichtigt wird. Beispielsweise können von einem Umfeld hervorgerufene Sensordaten, beispielsweise eine Hintergrundszenerie hinter einem Objekt in einem Kamerabild, berücksichtigt und verändert werden. So kann beispielsweise ein das Objekt umgebenes Umfeld bzw. zugehörige Sensordaten verändert werden. So können in einem Kamerabild beispielsweise Farben oder ein Motiv einer Hintergrundszenerie verändert werden. Auf diese Weise kann das tiefe Neuronale Netz darauf trainiert werden, auch mit üblicherweise auftretenden Varianzen umgehen zu können.

Ergebnis des Verfahrensschritts 201 ist eine Liste von erweiterten simulierten Sensordaten 9 und eine zugehörige Liste von erweiterten Sensorposen 6, wobei an dieser Stelle keine neuen Sensorposen 6 hinzugekommen sind, sondern jeweils zu jeder Sensorpose 6 eine Vielzahl von sich untereinander unterscheidenden Sensordaten 9 aus den ursprünglich simulierten Sensordaten 6 erzeugt wurde.

Handelt es sich bei den Sensordaten 6 um Kamerabilder, so können zum Bereitstellen der Vielzahl sich untereinander unterscheidenden Sensordaten 9 insbesondere die folgenden Bearbeitungen stattfinden:
- eine Änderung einer Objektfarbe, eines Objektreflexionsgrades und/oder eines Objektreflexionsinhaltes bzw. -varianten,
- eine Farb- und/oder Helligkeitsverschiebung,
- eine Änderung des Hintergrunds, z.B.
   - ein zufällig ausgewähltes Bild als Hintergrund,
   - eine zufällige Auswahl eines Bildbereichs,
   - eine Farb- und/oder Helligkeitsverschiebung,
   - eine Drehung und/oder Spiegelung eines Bildinhalts,
   - ein Rauschen und/oder ein Weichzeichnen,
   - eine Änderung einer Beleuchtungssituation (z.B. Lichtquellen, Glanzpunkte etc.)
   - ein Verdecken zufällig ausgewählter Bildbereiche,
   - eine Normierung,
   - Änderungen ausgehend von Sensoreigenschaften:
   - Änderung einer Farbe, einer Helligkeit, eines Rauschens, einer Verzeichnung, einer fokalen Länge, einer Pixelanzahl, Motion Blur, Saturierung, Kontrast sowie Artefakte (z.B. Vignettierung, Blendflecken, chromatische Aberration etc.).

In einem Verfahrensschritt 202 erfolgt anschließend das Training des tiefen Neuronalen Netzes 1. Während der Trainingsphase werden in an sich bekannter Weise Gewichte des tiefen Neuronalen Netzes 1 angepasst, wobei hierzu in einem Verfahrensschritt 203 Losswerte 11 einer Lossfunktion auf Grundlage eines Vergleichs zwischen einer vom tiefen Neuronalen Netz 1 geschätzten Sensorpose 12 bzw. Kamerapose und der beim Simulieren verwendeten Sensorpose 6 bzw. Kamerapose berechnet wird.

Es ist im Verfahrensschritt 203 vorgesehen, dass eine Lossfunktion verwendet wird, bei der ein Betrachtungsabstand des Sensors zum zu verfolgenden Objekt berücksichtigt wird.

Nach einem Konvergieren des berechneten Losswertes 11 wird die Trainingsphase beendet. Das tiefe Neuronale Netz 1 ist dann trainiert und kann auf erfasste Sensordaten bzw. Kameradaten angewendet werden, um eine Kamerapose zu schätzen. Das tiefe Neuronale Netz 1 ist hierbei spezifisch auf ein Objekt trainiert.

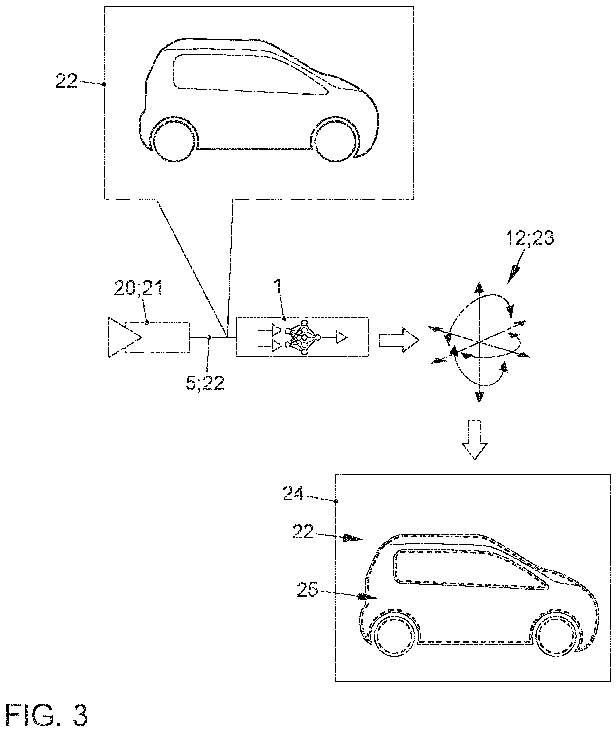

In Fig. 3 ist eine schematische Darstellung einer Anwendung des trainierten tiefen Neuronalen Netzes 1 gezeigt. Ein Sensor 20 ist in der gezeigten Ausführungsform eine Kamera 21, welche Sensordaten 5 in Form von Kamerabildern 22 bereitgestellt.

Die Sensordaten 5 bzw. Kamerabilder 22 werden dem gemäß dem in der Fig. 2 gezeigten Verfahren trainierten tiefen Neuronalen Netz 1 als Eingangsdaten zugeführt. Das trainierte tiefe Neuronale Netz 1 schätzt auf Grundlage der Sensordaten 5 bzw. der Kamerabilder 22 eine Sensorpose 12 bzw. eine Kamerapose 23.

Auf Grundlage der geschätzten Sensorpose 12 bzw. Kamerapose 23 kann anschließend eine Überlagerung 24 von erfassten Sensordaten 5 bzw. eines erfassten Kamerabildes 22 mit einer Zusatzinformation 25 ("Augmented Reality") erfolgen, welche in der gezeigten Darstellung ein über das Fahrzeug überlagertes dreidimensionales Objektmodell des Fahrzeugs umfasst.

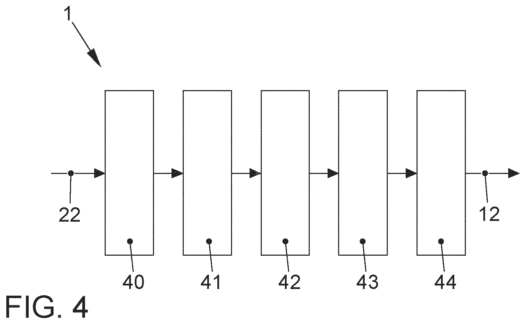

In Fig. 4 ist eine schematische Darstellung eines Aufbaus einer Ausführungsform des tiefen Neuronalen Netzes 1 gezeigt. Der Eingangsschicht 40 werden z.B. Kamerabilder 22 zugeführt. Das tiefe Neuronale Netz 1 umfasst eine Eingangsschicht 40. Auf die Eingangsschicht 40 kann ein vortrainierter Merkmalsextraktor 41 folgen, der aus zugeführten Sensordaten Merkmale extrahiert, z.B. Kanten, Farben, Formen bzw. allgemein Objektmerkmale (Features) in erfassten Kamerabildern.

Es folgt eine Gal-Dropout-Schicht 42, in der während einer Inferenzphase zufällig Neuronen deaktiviert werden. Bei mehrmaliger Anwendung ermöglicht dies eine statistische Betrachtung der jeweils inferierten Ergebnisse.

Auch während der Trainingsphase kann ein Dropout stattfinden, um Effekten einer Überanpassung des tiefen Neuronalen Netzes 1 entgegenzuwirken.

Nach der Gal-Dropout-Schicht 42 folgt ein mehrschichtiger Perzeptronblock 43, welcher neben dem Merkmalsextraktor 41 während der Trainingsphase durch Ändern von Gewichtungen und/oder Schwellenwerten in einzelnen Neuronen trainiert wird. Von dem tiefen Neuronalen Netz 1 inferierte Ergebnisse, das heißt die geschätzte Sensorpose 12, werden an einer Ausgangsschicht 44 bereitgestellt.

### Bezugszeichenliste

- 1: tiefes Neuronales Netz
- 2: Trainingsdatensatz
- 4: dreidimensionales Objektmodell
- 5: erfasste Sensordaten
- 6: Sensorpose (Label)
- 7: Sensorposensignal
- 8: simulierte Sensordaten
- 9: veränderte Sensordaten
- 11: Losswert
- 12: geschätzte Sensorpose
- 20: Sensor
- 21: Kamera
- 22: Kamerabild
- 23: Kamerapose
- 24: Überlagerung
- 25: Zusatzinformation (Objektmodell)
- 30: Vorrichtung
- 31: Mittel
- 32: Recheneinrichtung
- 33: Speicher
- 40: Eingangsschicht
- 41: Merkmalsextraktor
- 42: Gal-Dropout-Schicht
- 43: Perzeptronblock
- 44: Ausgangsschicht
- 100-102: Verfahrensschritte
- 200-203: Verfahrensschritte

## Patentansprüche

1. Verfahren zum Bereitstellen einer Objektverfolgungsfunktion,
wobei die Objektverfolgungsfunktion auf Grundlage von erfassten Sensordaten (5) eines Sensors (20) eine Sensorpose (12) relativ zu einem zu verfolgenden Objekt bereitstellt, wobei die Objektverfolgungsfunktion mittels eines objektspezifisch trainierten tiefen Neuronalen Netzes (1) bereitgestellt wird, und
wobei das objektspezifisch trainierte tiefe Neuronale Netz (1) mit Hilfe von simulierten Sensordaten (8) trainiert wird,
wobei beim Trainieren des tiefen Neuronalen Netzes (1) eine Lossfunktion (11) verwendet wird, bei der ein Betrachtungsabstand des Sensors (20) zum zu verfolgenden Objekt berücksichtigt wird, wobei für die Lossfunktion (11) ein Fehler berücksichtigt wird, der auf Grundlage einer Differenz zwischen einer beim Simulieren verwendeten Sensorpose (12) und einer mittels des tiefen Neuronalen Netzes geschätzten Sensorpose (12) bestimmt wird,
**dadurch gekennzeichnet, dass**
die Differenz auf Grundlage des Betrachtungsabstandes zwischen dem Sensor (20) und dem Objekt normalisiert wird.

2. Verfahren nach Anspruch 1, **dadurch gekennzeichnet, dass** Sensorposen (6) relativ zu dem zu verfolgenden Objekt, für die die simulierten Sensordaten (8) erzeugt werden, zufällig gewählt werden.

3. Verfahren nach Anspruch 1 oder 2, **dadurch gekennzeichnet, dass** zum Erzeugen der simulierten Sensordaten (8) mindestens eine Eigenschaft des zu verfolgenden Objekts verändert wird.

4. Verfahren nach einem der vorangegangenen Ansprüche, **dadurch gekennzeichnet, dass** beim Erzeugen der simulierten Sensordaten (8) mindestens eine Eigenschaft des Sensors (20) berücksichtigt wird.

5. Verfahren nach einem der vorangegangenen Ansprüche, **dadurch gekennzeichnet, dass** beim Erzeugen der simulierten Sensordaten (8) mindestens eine Umfeldeigenschaft berücksichtigt wird.

6. Verfahren nach einem der vorangegangenen Ansprüche, **dadurch gekennzeichnet, dass** während einer Inferenzphase des tiefen Neuronalen Netzes Neuronen (1) zufällig deaktiviert werden.

7. Vorrichtung (30) zur Datenverarbeitung, umfassend Mittel (31) zur Ausführung der Verfahrensschritte des Verfahrens nach einem beliebigen der Ansprüche 1 bis 6.

8. Computerprogramm, umfassend Befehle, die bei der Ausführung des Computerprogramms durch einen Computer diesen veranlassen, die Verfahrensschritte des Verfahrens nach einem beliebigen der Ansprüche 1 bis 6 auszuführen.

9. Computerlesbares Speichermedium, umfassend Befehle, die bei der Ausführung durch einen Computer diesen veranlassen, die Verfahrensschritte des Verfahrens nach einem beliebigen der Ansprüche 1 bis 6 auszuführen.

## Claims

1. Method for providing an object tracking function,
wherein the object tracking function provides, on the basis of acquired sensor data (5) from a sensor (20), a sensor pose (12) relative to an object to be tracked, wherein the object tracking function is provided by means of an object-specifically trained deep neural network (1), and
wherein the object-specifically trained deep neural network (1) is trained using simulated sensor data (8),
wherein a loss function (11) is used in the training of the deep neural network (1), in which loss function an observation distance from the sensor (20) to the object to be tracked is taken into account, wherein an error is taken into account for the loss function (11), which error is determined on the basis of a difference between a sensor pose (12) used in the simulation and a sensor pose (12) estimated by means of the deep neural network,
**characterized in that**
the difference is normalized on the basis of the observation distance between the sensor (20) and the object.

2. Method according to claim 1, **characterized in that** sensor poses (6) relative to the object to be tracked, for which sensor poses the simulated sensor data (8) are generated, are selected randomly.

3. Method according to claim 1 or 2, **characterized in that** at least one property of the object to be tracked is changed to generate the simulated sensor data (8).

4. Method according to any of the preceding claims, **characterized in that** at least one property of the sensor (20) is taken into account in the generation of the simulated sensor data (8).

5. Method according to any of the preceding claims, **characterized in that** at least one environment property is taken into account in the generation of the simulated sensor data (8).

6. Method according to any of the preceding claims, **characterized in that** during an inference phase of the deep neural network, neurons (1) are randomly deactivated.

7. Device (30) for processing data, comprising means (31) for carrying out the method steps of the method according to any one of claims 1 to 6.

8. Computer program, comprising commands which, when the computer program is executed by a computer, cause said computer to carry out the method steps of the method according to any one of claims 1 to 6.

9. Computer-readable storage medium, comprising commands which, when executed by a computer, cause said computer to carry out the method steps of the method according to any one of claims 1 to 6.

## Revendications

1. Procédé pour la fourniture d'une fonction de suivi d'objet,
dans lequel la fonction de suivi d'objet fournit, sur la base de données de capteur (5) détectées d'un capteur (20), une position de capteur (12) par rapport à un objet à suivre, dans lequel la fonction de suivi d'objet est fournie au moyen d'un réseau neuronal profond (1) entraîné de manière spécifique à l'objet, et
dans lequel le réseau neuronal profond (1) entraîné de manière spécifique à l'objet est entraîné à l'aide de données de capteur simulées (8),
dans lequel, lors de l'entraînement du réseau neuronal profond (1), une fonction de perte (11) est utilisée, dans laquelle une distance d'observation du capteur (20) par rapport à l'objet à suivre est prise en compte, dans lequel, pour la fonction de perte (11), une erreur est prise en compte, laquelle est déterminée sur la base d'une différence entre une position de capteur (12) utilisée lors de la simulation et une position de capteur (12) estimée au moyen du réseau neuronal profond,
**caractérisé en ce que**
la différence est normalisée sur la base de la distance d'observation entre le capteur (20) et l'objet.

2. Procédé selon la revendication 1, **caractérisé en ce que** des positions de capteur (6) par rapport à l'objet à suivre, pour lesquelles les données de capteur simulées (8) sont générées, sont choisies de manière aléatoire.

3. Procédé selon la revendication 1 ou 2, **caractérisé en ce que,** pour la génération des données de capteur simulées (8), au moins une propriété de l'objet à suivre est modifiée.

4. Procédé selon l'une des revendications précédentes,
**caractérisé en ce que,** lors de la génération des données de capteur simulées (8), au moins une propriété du capteur (20) est prise en compte.

5. Procédé selon l'une des revendications précédentes, **caractérisé en ce qu'**au moins une caractéristique d'environnement est prise en compte lors de la génération des données de capteur simulées (8).

6. Procédé selon l'une des revendications précédentes,
**caractérisé en ce que,** pendant une phase d'inférence du réseau neuronal profond, des neurones (1) sont désactivés de manière aléatoire.

7. Dispositif (30) permettant le traitement de données, comprenant des moyens (31) pour l'exécution des étapes de procédé du procédé selon l'une quelconque des revendications 1 à 6.

8. Programme informatique, comprenant des instructions qui, lors de l'exécution du programme informatique par un ordinateur, amènent celui-ci à exécuter les étapes de procédé du procédé selon l'une quelconque des revendications 1 à 6.

9. Support de stockage lisible par ordinateur, comprenant des instructions qui, lors de l'exécution par un ordinateur, amènent celui-ci à exécuter les étapes de procédé du procédé selon l'une quelconque des revendications 1 à 6.
